# EUROPÄISCHE PATENTSCHRIFT

(11) **EP 1 381 795 B1**
(45) Veröffentlichungstag und Bekanntmachung des Hinweises auf die Patenterteilung: **11.05.2005**
(21) Anmeldenummer: 02712945.1
(22) Anmeldetag: 13.03.2002
(51) Int. Cl.: F16H 49/00

(54) **WELLGETRIEBE**
HARMONIC DRIVE
REDUCTEUR A PLANETAIRE

(30) Priorität: 21.04.2001 DE 10120735
(43) Veröffentlichungstag der Anmeldung: 21.01.2004
(73) Patentinhaber: Oechsler Aktiengesellschaft, 91522 Ansbach (DE)
(72) Erfinder: POEHLAU, Frank, 90762 Fuerth (DE)
(74) Vertreter: Führing, Dieter
(86) Internationale Anmeldenummer: PCT/EP2002/002757
(87) Internationale Veröffentlichungsnummer: WO 2002/086353

(56) Entgegenhaltungen:
- DE-U- 29 614 738
- US-A- 4 506 590
- US-A- 4 809 191
- US-A- 4 998 084
- US-A- 6 084 400
- PATENT ABSTRACTS OF JAPAN vol. 2000, no. 04, 31. August 2000 (2000-08-31) -& JP 2000 009192 A (HARMONIC DRIVE SYST IND CO LTD), 11. Januar 2000 (2000-01-11)
- PATENT ABSTRACTS OF JAPAN vol. 2000, no. 01, 31. Januar 2000 (2000-01-31) -& JP 11 295330 A (YAZAKI CORP), 29. Oktober 1999 (1999-10-29)
- PATENT ABSTRACTS OF JAPAN vol. 011, no. 350 (P-637), 17. November 1987 (1987-11-17) & JP 62 129717 A (TOYOTA MOTOR CORP), 12. Juni 1987 (1987-06-12)

## Beschreibung

Die Erfindung betrifft ein Wellgetriebe gemäß dem Oberbegriff des Hauptanspruches.

Die Funktion eines solchen - auch als Harmonic Drive oder als Ringband-Getriebe bekannten - Wellgetriebes als selbsthemmend sehr stark untersetzendem, koaxialem System beruht darauf, daß ein rotierend angetriebener unrunder Triebkern, ein sogenannter Well-Generator, einen Innenrad-Reifen umlaufend radial verformt und dadurch dessen Außenmantelfläche längs eines umlaufenden Bogenstückes lokal nach außen gegen die hohlzylindrische Innenmantelfläche geringfügig größeren Umfanges eines gehäusefest stationären, formstabilen Stützringes andrückt. Infolgedessen wälzt sich das Innenrad (oder ein darauf verdrehbar gelagerter Radreifen), gewöhnlich über Verzahnungen, also formschlüssig im Stützring ab. Dabei dreht das Rad bzw. sein Reifen sich nach Maßgabe der Umfangsdifferenz zwischen Stützring und Innenrad langsamer als der motorisch angetriebene Kern des Wellgenerators. Diese gegenüber dem Antrieb stark verlangsamte Drehbewegung wird vorzugsweise über die Außenverzahnung des Innenrad-Reifens auf die Innenverzahnung eines dem Stützring konzentrisch axial benachbarten aber im Gegensatz zu jenem nicht stationär sondern koaxial verdrehbar angeordneten Abtriebsringes übertragen. Bei den vom Deutschen Gebrauchsmuster 2 96 14 738 bekannten und in dem Beitrag "Genial einfach" von H. Hirn (KEM Antriebstechnik Heft 10/1996). näher beschriebenen Ausführungsformen solcher aus wenigen Kunststoff-Spritzgußteilen erstellten Wellgetriebe wird als Wellgenerator der (im Axial-Querschnitt etwa dreieckförmige oder bevorzugt ovale) Triebkern konzentrisch in der umlaufend radial verformbaren Nabe des Innenrades gedreht. Die in Längsrichtung formstabilen Speichen zwischen der Nabe und dem Reifen bewirken, daß dessen Außenverzahnung entsprechend ihrer radialen Verformung nur über das sich umlaufend verlagernde Bogenstück mit den koaxialen, axial gegeneinander versetzten Innenverzahnungen des Stützringes und des Abtriebsringes in Eingriff gerät. Wie in der internationalen Anmeldung WO 01/31760, die gemäß Artikel 54(3) EPÜ zum Stand der Technik gehört, skizziert, kann die radial außerhalb der Innenverzahnung gelegene Felge des Abtriebsringes direkt als Riemenscheibe dienen; oder der Abtriebsring ist Teil einer haubenförmig ausgestalteten Scheibe, die mit einer zur Drehachse des Wellgenerators konzentrischen Abtriebswelle ausgestattet und gelagert ist.

Der Antrieb des Well-Generators erfolgt üblicherweise über einen koaxial angeflanschten, hochtourigen und deshalb preiswert verfügbaren Kleinspannungs-Gleichstrommotor, dessen schnelle Rotation in eine sehr viel langsamere Drehbewegung entsprechend größeren Drehmomentes untersetzt wird, was vielfältig Anwendung etwa als Stellelement z.B. für das Motor- und Klimamanagement und für andere insbesondere manuelle Eingriffe ersetzende Funktionen im Kraftfahrzeug findet. Wenn es die Anwendung erfordert, daß Rückmeldungen über die aktuelle Drehwinkelstellung dieses Stellelementes zu verarbeiten sind, etwa als Istwerte für einen Positionsregler, dann wird dem Getriebe gewöhnlich abtriebsseitig eine Sensorscheibe angeflanscht, die mit beispielsweise optronisch abzutastenden absoluten oder inkrementalen Winkelkodierungen ausgestattet ist, was aber infolge zusätzlich zu montierender und im Betrieb siöranfälliger Funktionsteile und wegen des dadurch bedingten größeren Raumbedarfs grundsätzlich nachteilig ist.

Solche zusätzlich an das eigentliche Getriebegehäuse angeflanschten Sondereinrichtungen wie insbesondere für Messzwecke sind etwa aus dem Abstract zu der JP05071592A ersichtlich.

Dort treibt die Antriebswelle des Wellgenerators auch noch über ein Schrägzahnradgetriebe eine quer zur Getriebeachse orientierte Meßwelle an, die das Getriebegehäuse verläßt und in ein außen daran montiertes Zusatzgehäuse eintritt, das mit einem Drehwinkelsensor für die Bewegung einer Meßscheibe ausgestattet ist. Ein weiteres Außengehäuse ist mit einem Zugbelastungssensor bestückt. Solche externen messtechnischen Applikationen am eigentlichen, das kompakte Wellgetriebe umgebenden Gehäuse vergrößern das Gesamtgerätevolumen ausweislich der dortigen Querschnittsdarstellung ganz erheblich.

JP 2000 009192 A offenbart ein Wellgetriebe mit einem Wellgenerator-Triebkern in einem umlaufend radial verformbaren Innenrad, das sich in einem gehäusefest formstabilen Stützring - etwas größeren Durchmessers als des unverformten Innenrad-Außendurchmessers - erstreckt, wobei einerseits der drehbare Abtriebsring und andererseits das Getriebegehäuse mit Sensorgebern bzw. mit Sensoraufnehmern ausgestattet sind.

Die eingangs beschriebenen, von miniaturisierten hochtourigen Elektromotoren betreibbaren Ausgestaltungen von Wellgetrieben können extrem kleinbauend realisiert werden, weil sie aufgrund der Speichenbauweise keiner Kugellagerung in Zusammenhang mit der Wirkung des Wellgenerators bedürfen - entgegen den Verhältnissen nach der US 4,506,590 in der Bauform eines Hydraulik-Wellgetriebemotors mit induktiv arbeitenden Drehbewegungssensoren, die einander radial gegenüberstehend einerseits um eine gehäusefeste, im Querschnitt exzentrische Tragwelle herum und andererseits vor der Stirnfläche eines um die Tragwelle rotierenden Topfes montiert sind und deshalb wieder zusätzlich zur eigentlichen Wellgetriebefunktion noch Montage- und Funktionsfreiräume benötigen.

Der vorliegenden Erfindung liegt deshalb die technische Problemstellung zugrunde, ein kleinbauendes Wellgetriebe, wie es sich im praktischen Einsatz bereits bewährt hat, dahingehend weiterzubilden, daß die Realisierung der Sensorik noch kompakter wird, so daß die Getriebefunktionalität ohne Erfordernis vergrößerten Sensorikeinbauraumes noch spürbar erweitert wird.

Dieses Problem wird durch die Merkmale des Anspruchs 1 gelöst .

Gemäß der Merkmalskombination des Hauptanspruches ist jene Aufgabe im wesentlichen dadurch gelöst, daß das Vorbeibewegen des Abtriebsringes an einer gerätefesten Referenzstellung mittels direkt in den Abtriebsring eingespritzter Sensorikelemente erfaßt wird; beispielsweise magnetisch, wofür dann der Abtriebsring lokal mit wenigstens einem Sensorgeber wie einem ferro- oder permanentmagnetischen Dipol ausgestattet ist, dessen Passage mittels wenigstens eines gehäusefesten, etwa in den Stützring integrierten Sensoraufnehmers wie einem Magnetfeldsensor erfaßt wird.

Die auf stationären Teilen nahe dem rotierenden Abtriebsring gelegenen, also etwa in den Stützring oder das benachbarte Gehäuseteil integrierten (eingespritzten oder nachträglich darauf applizierten) Sensoraufnehmer sind im Falle magnetischer Geber vorzugsweise als Hallgeneratoren ausgebildet, die in bekannter Weise auf die Änderung eines - Strompfade durch ein Halbleiterelement verdrängendes - Magnetfeldes quer zur Strompfadrichtung mit einer Potentialverschiebung reagieren, die als polaritätsabhängige Signalspannung abgreifbar ist.

Die mit dem Abtriebsring rotierenden Sensorgeber, etwa magnetische Dipole, können im Zuge der Spritzguß-Fertigung je nach dem dafür eingesetzten Material dann als ferromagnetische Stäbe oder als permanente Stabmagnete in die Spritzgußform des Abtriebsringes eingelegt sein, um dort umspritzt zu werden; oder es werden später lokal zu magnetisierende Materialien im Mehrkomponenten-Spritzguß in den Abtriebsring integriert. Je nach der Anordnung der Sensorgeber radial oder axial neben dem Abtriebsring sind die Achsen der gerichtet orientierten Sensorgeber wie magnetischen Dipole im Abtriebsring quer oder längs zur Drehachse des Wellgetriebes orientiert.

So signalisiert ein Sensoraufnehmer infolge Ansprechens auf einen Sensorgeber, etwa einen Dipol das Erreichen einer konstruktiv vorgegebenen Drehwinkelstellung des Abtriebsringes, dem stationären Gehäuse gegenüber, und die Periodizität dieses Ansprechens entspricht z.B. der Drehgeschwindigkeit des Abtriebsringes, wenn ein Sensorgeber pro Umlauf einmal erfaßt wird. Zwei in Drehrichtung etwas gegeneinander versetzte Signifikanzen von aufeinanderfolgenden Sensorgebern wie Polaritäten im Falle von magnetischen Dipolen ermöglichen es, die Drehrichtung zu erfassen, indem die beiden Ansprachen des Sensoraufnehmers, hier die beiden Polaritäten eines in Drehrichtung ausgerichteten Dipoles oder zweier quer dazu antiparallel zueinander versetzter Dipole vom gehäusefesten, also stationären Sensoraufnehmer nacheinander erfaßt werden; oder nicht voneinander zu unterscheidende Sensorgeber rotieren auf einander benachbarten Bahnen, denen je ein Sensoraufnehmer zugeordnet ist, um zu erfassen, welcher beider Dipole drehrichtungsabhängig dem anderen nachfolgt oder vorauseilt.

Was vorstehend unter direkter Bezugnahme auf permanentmagnetische Sensorik erläutert wurde, läßt sich im Rahmen vorliegender Erfindung auch mit auf anderen physikalischen Erscheinungen beruhender Sensorik realisieren. So kann als Sensorgeber eine Lichtquelle und Als Sensoraufnehmer ein lichtempfindliches Element dienen, eventuell unter Anwendung von moduliertem, polarisiertem oder spektral derart gewähltem Licht, daß an sich störende Umgebungseinflüsse problemlos beherrschbar sind; oder die Sensorik wird als kapazitives System realisiert.

Bei einem aus wenigen Teilen im Kunststoff-Spritzguß fertigbaren Wellgetriebe erübrigt sich also der zusätzliche Raumbedarf für eine abtriebsseitig anzuflanschende Sensorscheibe zum Erfassen kinematischer Informationen etwa für eine Regelungsschaltung, wenn die entsprechende Sensorik erfindungsgemäß unmittelbar in das Getriebe integriert wird. Dafür ist gemäß einer Weiterbildung der Erfindung vorzugsweise der rotierende Abtriebsring mit wenigstens einem autarken Sensorgeber wie einem magnetischen Dipol ausgestattet, dessen Passage einer gehäusefesten Position von einem stationär angeordneten Sensoraufnehmer erfaßt wird, der im Falle magnetischer Sensorik vorzugsweise als Hallgenerator realisiert und am Stützring des Wellgetriebes angeordnet ist.

## Patentansprüche

1. Wellgetriebe mit einem Wellgenerator-Triebkern in einem umlaufend radial verformbaren Innenrad, das sich in einem gehäusefest formstabilen Stützring und in einem diesem axial benachbart drehbar gelagerten, ebenfalls radial formstabilen Abtriebsring - jeweils etwas größeren Innendurchmessers als des unverformten Innenrad-Außendurchmessers - erstreckt, wobei einerseits der drehbare Abtriebsring und andererseits der stationäre Stützring oder das Getriebegehäuse mit Sensorgebern bzw. mit den Drehbewegungsweg der Sensorgeber erfassenden Sensoraufnehmern ausgestattet sind, wobei die Sensorgeber in den rotierenden Abtriebsring eingespritzt sind.

2. Wellgetriebe nach einem Anspruch 1, **dadurch gekennzeichnet, daß** magnetische bzw. induktive, kapazitive oder optronische Sensorgeber vorgesehen sind.

3. Wellgetriebe nach Anspruch 1, **dadurch gekennzeichnet, daß** der Abtriebsring mit wenigstens einem autark, ohne externe Energieversorgung, arbeitenden Sensorgeber und der Stützring oder das Gehäuse mit wenigstes einem Sensoraufnehmer ausgestattet ist.

4. Wellgetriebe nach dem vorangehenden Anspruch, **dadurch gekennzeichnet, daß** der Abtriebsring mit wenigstens einem magnetischen Dipol als Sensorgeber und der Stützring oder das Gehäuse mit wenigstes einem dem Drehbewegungsweg des Dipoles zugeordneten Sensoraufnehmer ausgestattet ist.

5. Wellgetriebe nach dem vorangehenden Anspruch, **dadurch gekennzeichnet, daß** ferromagnetische oder permanentmagnetische Dipole von stabförmiger Ausbildung als Sensorgeber vorgesehen sind.

6. Wellgetriebe nach dem vorangehenden Anspruch, **dadurch gekennzeichnet, daß** die als Sensorgeber vorgesehenen Dipole achsparallel im Abtriebsring orientiert und deren Bewegungswegen zugeordnete Sensoraufnehmer am Stützring angeordnet sind.

7. Wellgetriebe nach einem der Ansprüche 4 bis 6, **dadurch gekennzeichnet, daß** in Bewegungsrichtung aufeinander folgend abwechselnde magnetische Polaritäten vom Sensoraufnehmer erfaßbar sind.

8. Wellgetriebe nach einem der Ansprüche 4 bis 7, **dadurch gekennzeichnet, daß** mehrere Dipole als Sensorgeber auf einander benachbarten Bahnen rotieren, denen je ein Sensoraufnehmer zugeordnet ist.

9. Wellgetriebe nach einem der Ansprüche 4 bis 8, **dadurch gekennzeichnet, daß** die Dipole als Sensorgeber im Mehrkomponenten-Spritzguß eingeformte magnetisierbare Bereiche des Abtriebsringes sind.

10. Wellgetriebe nach einem der Ansprüche 4 bis 9, **dadurch gekennzeichnet, daß** die Sensoraufnehmer für die magnetischen Dipole als den Sensorgebern Hallgeneratoren sind.

## Claims

1. Harmonic drive with a wave generator drive core disposed in a rotating radial deformable inner wheel that extends in a stationary, dimensionally stable support ring and in an axially neighbouring, rotatably mounted drive ring, which is also radially and dimensionally stable and each of which has a somewhat larger inner diameter than the non-deformed outer diameter of said inner wheel, whereby the rotatable drive ring, on the one hand, and the stationary support ring or the drive housing, on the other hand, are equipped with sensor transmitters or sensor detectors which detect the rotation path of the sensor transmitters, the sensor transmitters being injection-moulded in the rotary drive ring.

2. Harmonic drive according to Claim 1, **characterized in that** there are provided magnetic or inductive, capacitive or opto-electronic sensor transmitters.

3. Harmonic drive according to Claim 1, **characterized in that** the drive ring is equipped with at least one independently operating sensor transmitter without external energy supply, and the support ring or the housing is equipped with at least one sensor detector.

4. Harmonic drive according to the previous Claim, **characterized in that** the drive ring is equipped with at least one magnetic dipole as sensor transmitter, and the support ring or the housing is equipped with at least one sensor detector designated for the rotation path of the dipole.

5. Harmonic drive according to the previous Claim, **characterized in that** ferromagnetic or permanent-magnetic dipoles of a bar-shaped design are provided as sensor transmitters.

6. Harmonic drive according to the previous Claim, **characterized in that** the dipoles provided as sensor transmitters are oriented axis-parallel in the drive ring and their sensor detectors designated for movement paths are arranged on the support ring.

7. Harmonic drive according to one of Claims 4 to 6, **characterized in that** alternating magnetic polarities, which are in sequence in the direction of movement, can be detected by the sensor detector.

8. Harmonic drive according to one of Claims 4 to 7, **characterized in that** a plurality of dipoles rotate as sensor transmitters on juxtaposed tracks whereby one sensor detector is designated for each of said tracks.

9. Harmonic drive according to one of Claims 4 to 8, **characterized in that** the dipoles acting as sensor transmitters are injection-molded by multi-component injection molding in magnetizable areas of the drive ring.

10. Harmonic drive according to one of Claims 4 to 9, **characterized in that** the sensor detectors for the magnetic dipoles as the sensor transmitters are hall generators.

## Revendications

1. Engrenage planétaire comprenant un noyau d'entraînement à générateur planétaire dans une roue intérieure rotative déformable dans le sens radial qui s'étend dans une bague d'appui indéformable fixée au boîtier et dans une bague d'entraînement, également indéformable dans le sens radial, logée de manière à pouvoir tourner à côté de celle-ci, ayant chacune un diamètre intérieur légèrement supérieur au diamètre extérieur de la roue intérieure non déformée, la bague d'entraînement d'un côté et la bague d'appui stationnaire de l'autre côté ou le carter d'engrenage étant équipés d'émetteurs de détection ou de capteurs de détection qui détectent la course du mouvement rotatif des émetteurs de détection, les émetteurs de détection étant injectés dans la bague d'entraînement rotative.

2. Engrenage planétaire selon une revendication 1, **caractérisé en ce que** des émetteurs de détection magnétiques ou inductifs, capacitifs ou optoélectroniques sont prévus.

3. Engrenage planétaire selon la revendication 1, **caractérisé en ce que** la bague d'entraînement est équipée d'au moins un émetteur de détection fonctionnant de manière autonome, sans source d'énergie externe, et la bague d'appui ou le boîtier est équipé d'au moins un capteur de détection.

4. Engrenage planétaire selon les revendications précédentes, **caractérisé en ce que** la bague d'entraînement est équipée d'au moins un dipôle magnétique faisant office d'émetteur de détection et la bague d'appui ou le boîtier est équipé d'au moins un capteur de détection associé à la course de rotation du dipôle.

5. Engrenage planétaire selon la revendication précédente, **caractérisé en ce que** des dipôles ferromagnétiques ou magnétiques en permanence en forme de barres sont prévus comme émetteurs de détection.

6. Engrenage planétaire selon la revendication précédente, **caractérisé en ce que** les dipôles prévus comme émetteurs de détection sont orientés dans la bague d'entraînement parallèlement à l'axe et leurs capteurs de détection associés aux courses de mouvement sont disposés sur la bague support.

7. Engrenage planétaire selon l'une des revendications 4 à 6, **caractérisé en ce que** le sens de mouvement des polarités magnétiques alternées successives peut être détecté par les capteurs de détection.

8. Engrenage planétaire selon l'une des revendications 4 à 7, **caractérisé en ce que** plusieurs dipôles faisant office d'émetteurs de détection tournent sur des bandes voisines les unes des autres auxquelles est à chaque fois associé un capteur de détection.

9. Engrenage planétaire selon l'une des revendications 4 à 8, **caractérisé en ce que** les dipôles sous la forme d'émetteurs de détection sont des zones magnétisables de la bague d'entraînement moulées par injection de plusieurs composants.

10. Engrenage planétaire selon l'une des revendications 4 à 9, **caractérisé en ce que** les capteurs de détection pour les dipôles magnétiques sont sous la forme de générateurs à effet Hall des émetteurs de détection.
